# EUROPEAN PATENT APPLICATION

(11) **EP 4 807 322 A1**
(43) Date of publication of application: **16.09.2026**
(21) Application number: 26159938.5
(22) Date of filing: 20.02.2026
(51) Int. Cl.: G01C 21/16, B64D 45/08, G01C 21/20, G08G 5/54, G08G 5/57, G08G 5/90

(54) **INTEGRITY OF NAVIGATION SYSTEM FOR UNCREWED AIRCRAFT SYSTEMS AT VERTIPORTS**

(30) Priority: 12.03.2025 US 202519077965
(71) Applicant: Honeywell International Inc., Charlotte, NC 28202 (US)
(72) Inventor: BAGESHWAR, Vibhor L., Charlotte, 28202 (US)
(74) Representative: Haseltine Lake Kempner LLP

(57) **Abstract**

A system comprises a vision sensor on a vehicle; an onboard IMU that produces inertial measurements; an onboard strapdown INS that receives the inertial measurements; an onboard first processor coupled to the vision sensor; and an onboard second processor coupled to the strapdown INS and the first processor. A navigation solution integrity module is in operative communication with the second processor. The navigation solution integrity module includes a fault detection function with a set of discriminators, decision thresholds, and protection levels. The first processor hosts program modules that extract landing marker information and comprise computer vision and machine learning modules that operate in parallel. The second processor hosts program modules that provide filter and association functions. The navigation solution integrity module provides a marker integrity check, which detects and excludes landing markers with three or four corners that lead to an inconsistent navigation solution, using a solution separation technique.

## Description

### BACKGROUND

Uncrewed aircraft systems (UAS) applications in the National Airspace include delivery, sampling, surveillance, and passenger transport. UAS flights can be broken into various segments or phases including take-off, ascent to cruise, cruise, descent to landing, and landing. The cruise segment can include mission segments where the UAS loiters or performs other tasks. UAS landing sites include allocated landing zones such as vertiports on the ground, or on top of buildings, or on moving vehicles such as trucks or ships.

UAS navigation systems must satisfy stringent requirements to enable autonomous landing at sites such as vertiports to support these applications. These navigation systems must operate in both Global Navigation Satellite System (GNSS) available and GNSS denied environments including jammed or spoofed conditions. Further, certain UAS operators have requirements that vertiports are unpowered or minimally powered, so surface infrastructure to support navigation systems cannot include powered features or GNSS base stations.

As a result, there is a need for UAS navigation systems that have sensors, alternative to GNSS sensors, which aid the navigation system in a landing zone while relying on unpowered features.

### SUMMARY

A system comprises at least one vision sensor mounted on a vehicle; an inertial measurement unit (IMU) operative to produce inertial measurements for the vehicle; and a strapdown inertial navigation system (INS) on the vehicle and configured to receive the inertial measurements from the IMU. At least one first processor on the vehicle is operatively coupled to the at least one vision sensor; and at least one second processor on the vehicle is operatively coupled to the strapdown INS and the at least one first processor. A navigation solution integrity module is in operative communication with at least one second processor. The navigation solution integrity module includes a fault detection function with a set of discriminators, decision thresholds, and protection levels. The at least one first processor hosts a first set of program modules operative for extracting landing marker information, with the first set of program modules comprising a computer vision module and a machine learning module that are configured to operate in parallel with each other. The at least one second processor hosts a second set of program modules operative to provide filter and association functions, with the second set of program modules comprising a navigation filter, an association checks module, and a tentative markers module. The navigation solution integrity module is operative to provide a marker integrity check, which detects and excludes landing markers with three or four corners that lead to an inconsistent navigation solution, using a solution separation technique.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for providing landing zone navigation of a vehicle, according to one embodiment;
Figure 2 is a block diagram of a system for providing filter and association functions that can be performed in the system of Figure 1, according to an example embodiment;
Figure 3 is a functional block diagram of a method for providing filter and association functions, according to an example implementation;
Figure 4 is a functional block diagram of a method for providing association checks, according to an example implementation;
Figure 5 is a schematic diagram of an exemplary solution separation filter arrangement for an integrity checks function;
Figure 6 is a functional block diagram of an integrity checks module for sub-solutions, according to an example implementation; and
Figure 7 is a functional block diagram of an integrity checks module for sub-sub-solutions, according to an example implementation.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

An integrity approach for a navigation system used in UAS operations at vertiports is described herein.

Navigation systems for vehicles using vertiports typically operate using unpowered surface markers painted on landing zone surfaces such as landing pads. Each vertiport typically has a marker library for all landing pads and their markers and corresponding IDs. A UAS vehicle typically includes a sensor set having an inertial measurement unit (IMU), a camera, and other aiding sensors such as a GNSS receiver, an altimeter, or the like.

At vertiports that handle UAS operations, both crewed and uncrewed operations can occur. In addition, GNSS denied operations can occur at vertiports. Thus, as mentioned above, there are stringent requirements for UAS navigation operations at vertiports. The present navigation system and method utilize a tightly coupled approach to meet the stringent navigation requirements for UAS vehicles.

The present approach provides a high-integrity navigation system that uses camera, or other vision sensor, measurements of surface markers extracted using computer vision and machine learning techniques, to satisfy the stringent landing zone navigation requirements for UAS vertiport operations. In the present approach, an onboard camera or other vision sensor on a UAS vehicle is used in combination with landing markers, such as Aruco codes, fiducials, structured patterns, or the like, which are applied on surface landing zones, to aid a navigation system of the vehicle during landing zone operation. The markers are unpowered and can be painted or projected within a final approach and takeoff (FATO) area of a vertiport. These markers provide the onboard camera, or other vision sensor, with known surface features to compute measurements for the navigation system. These measurements can be extracted from the camera, or other vision sensor, using both the computer vision and machine learning techniques. The markers are then compared to a marker library for the vertiport to estimate the vehicle kinematic statistics relative to a landing zone.

For example, the present system can employ a combination of computer vision and machine learning algorithms to estimate position vectors to marker corners and to identify marker IDs from camera (or other vision sensor) measurements. In addition, the present system includes a combination of filter and association algorithms. The association algorithms use both the marker corners and the marker IDs to associate marker measurements with currently tracked markers. In the tightly coupled approach, the system can use extracted shapes with three corners as measurements (without IDs).

In one embodiment, the present system includes association algorithms that enable it to perform the following functions: track currently observed markers and fuse measurements from the different techniques; associate the marker IDs; initialize markers and their IDs that come into view of the onboard camera or other vision sensors; delete markers that are no longer in view of the onboard camera or other vision sensors; and reject false marker measurements that are provided by one or more of the techniques used to extract observations of the surface markers.

In one implementation of the present UAS navigation method, the following measurements and information are obtained: camera or other vision sensor measurements of surface markers; surface markers available in a vertiport's marker library; and positions and IDs of surface markers relative to a landing zone frame. The surface markers are extracted from camera or other vision sensor measurements using two methods operating in parallel, including the computer vision technique and the machine learning technique. The outputs include a camera or other vision sensor position relative to marker corners resolved in the landing zone frame, and marker IDs associated with the marker corners.

In the present approach, the integrity of a navigation solution is assured. The measurements are effectively groups of three or four marker corners. Solution separation techniques are used to identify and exclude one or more of the marker corners that lead to a statistically inconsistent navigation solution.

Table 1 below summarizes the steps for a tightly coupled implementation of the present UAS navigation method.

**Table 1**

| **Step** | **Tightly Coupled Implementation** | |
|---|---|---|
| | **Computer Vision** | **Machine Learning** |
| Measurement Statistics | 1. Vehicle position statistics relative to marker; 4- corner positions resolved in the landing zone frame; marker IDs. | |
| | 2. Vehicle position statistics relative to marker; 3-corner positions resolved in the landing zone frame. | |
| Strapdown INS | Vehicle position, velocity, and angular orientation statistics relative to the landing zone frame. | |
| State Vector | 1. Augmented with corner positions. | |
| | 2. Augmented with marker IDs. | |
| Predicted Statistics | 1. Vehicle position, velocity, and angular orientation error statistics. | |
| | 2. IMU bias statistics. | |
| | 3. Corner position error statistics. | |
| | 4. Marker IDs. | |
| TLOF Check | Confirm 3-corner and 4-corner position statistics are within TLOF. | |
| Association Check (AC) | 1. Chi squared test: corner positions. | 1. Chi squared test: corner positions. |
| | 2. Marker ID check. | 2. Marker ID check. |
| Initialization (Fail AC) | Initialize new position statistics. | Initialize new position statistics. |
| Updated Statistics (Pass AC) | 1. Update state error vector statistics. | 1. Update state error vector statistics. |
| | 2. Update corner statistics. | 2. Update corner statistics. |
| | 3. Maintain markers. | 3. Maintain markers. |
| Integrity | Solution separation approach. | |
| | 1. Sub-solutions: combinations of 4-corner groups to identify 4-corner groups that lead to inconsistent navigation solutions. | |
| | 2. Sub-sub solutions: combinations of 3-corner groups to identify whether 1 marker corner is leading to inconsistent navigation solutions. | |

The tightly coupled implementation of the present UAS navigation method is described in further detail below. In addition, further details of various embodiments are described hereafter and with reference to the drawings.

The landing zone kinematics described herein are defined using the following parameters:
*F_{b}* ≡ body frame;
*F_{c}* ≡ camera frame;
*F_{LZ}* ≡ landing zone frame; local horizontal, local vertical frame;
*̅p̅*̅ = vehicle position vector;
*̅p̅*̅_{*c*/*b*} = (known) camera position vector relative to *F_{b}*;
*r̅_{j,i}* ≡ position vector of corner *i* of marker *j* from *F_{c}*;
*r̅_{b,j,i}* ≡ position vector of corner *i* of marker *j* from *F_{b}*;
*̅ρ̅*̅_{j,i} ≡ (known from marker library) position vector of corner *i* of marker *j* from F*_{LZ}*; $\vec{p} + {\vec{ρ}}_{j , i} = {\vec{p}}_{c / b} + {\vec{r}}_{j , i} = {\vec{r}}_{bj , i} ∀ i = 1 , … , I ; I = 4 ;$
*C_{bc}* ≡ (known) DCM, camera frame to body frame;
*C_{LZb}* = DCM, body frame to landing zone frame;
DCM = direction cosine matrix;
*J* ≡ (known) total number of markers.

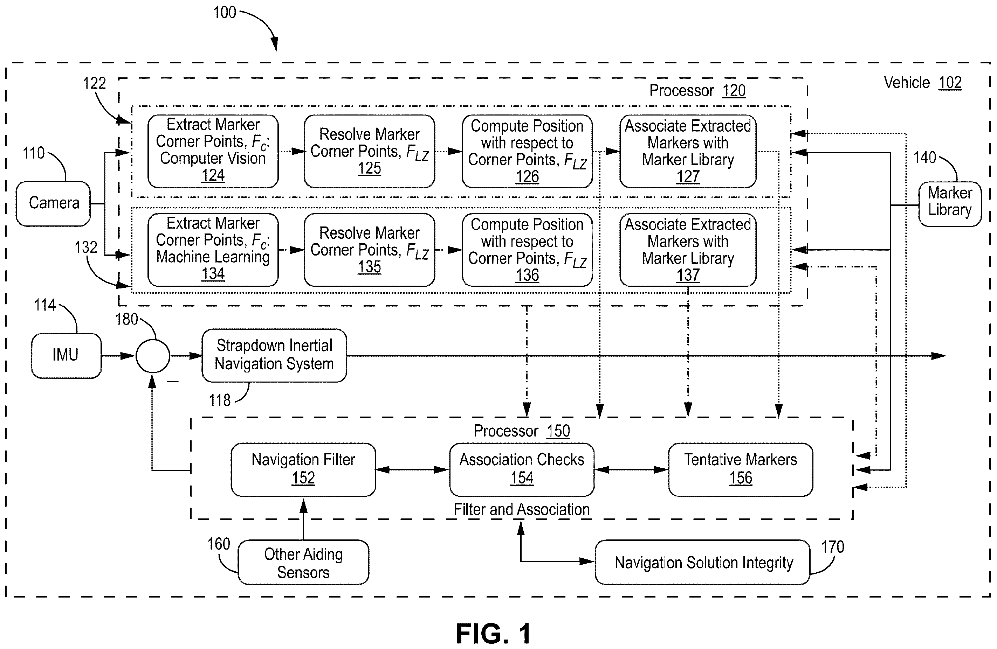

Figure 1 is a block diagram of a system 100 for providing landing zone navigation of a vehicle 102, according to one embodiment. The system 100 generally comprises at least one camera 110 or other vision sensor mounted on vehicle 102; an onboard inertial measurement unit (IMU) 114 operative to produce inertial measurements for vehicle 102; and a strapdown inertial navigation system (INS) 118 onboard vehicle 102 and configured to receive the inertial measurements from IMU 114. At least one first processor 120 onboard vehicle 102 is operatively coupled to camera 110 or other vision sensor; and at least one second processor 150 onboard vehicle 102 is operatively coupled to strapdown INS 118 and first processor 120.

The first processor 120 hosts a first set of program modules operative for extracting surface marker information. The first set of program modules comprises a computer vision module 122 and a machine learning module 132 that are configured to operate in parallel such that each performs a method for extracting marker information from images of markers in a landing zone, with the images captured by camera 110 or other vision sensor. The methods for extracting marker information are described in further detail hereafter. A marker library 140 for the landing zone is communicatively coupled to computer vision module 122 and machine learning module 132.

The second processor 150 hosts a second set of program modules operative to provide filter and association functions. The second set of program modules comprises a navigation filter 152, an association checks module 154 in operative communication with navigation filter 152, and a tentative markers module 156 in operative communication with association checks module 154. In addition, other aiding sensors 160, such as a GNSS receiver, an altimeter, a magnetometer, a barometer, or the like, can be communicatively coupled with navigation filter 152. A navigation solution integrity module 170 is in operative communication with second processor 150.

During operation, computer vision module 122 receives image data from camera 110, with the image data corresponding to a marker in a landing zone for vehicle 102, and performs a method for extracting marker information. The method is operative to extract marker corner points in a camera frame, *F_{c}* (block 124); resolve marker corner points in a landing zone frame, *F_{LZ}* (block 125); compute position statistics for vehicle 102 with respect to the corner points in a landing zone frame, *F_{LZ}* (block 126); and associate extracted markers with marker IDs in marker library 140 (block 127).

Simultaneously, machine learning module 132 also receives the image data from camera 110, and performs a method for extracting marker information. This method is also operative to extract marker corner points in the camera frame, *F_{c}* (block 134); resolve marker corner points in the landing zone frame, *F_{LZ}* (block 135); compute position statistics for vehicle 102 with respect to the corner points in the landing zone frame, *F_{LZ}* (block 136); and associate the extracted markers with marker IDs in marker library 140 (block 137).

As described in further detail hereafter, association checks module 154 receives the marker corner position statistics and position statistics for vehicle 102 computed by computer vision module 122, and also receives the marker corner position statistics and position statistics for vehicle 102 computed by machine learning module 132. The association checks module 154 then performs a first position statistics check for the marker corner position statistics and vehicle position statistics computed by computer vision module 122 based on predicted measurement vector statistics from navigation filter 152; and performs a second marker corner position statistics and vehicle position statistics check for the position statistics computed by machine learning module 132 based on the predicted measurement vector statistics from navigation filter 152. The association checks module 154 also performs a first identification (ID) check for a marker associated with a marker ID in marker library 140 based on the marker corner position statistics and vehicle position statistics computed by computer vision module 122 and a predicted ID; and performs a second ID check for the marker associated with the marker ID in the marker library based on the marker corner position statistics and vehicle position statistics computed by machine learning module 132 and the predicted ID.

The association checks module 154, after completing checks, directs the measurement statistics (and IDs, if available) to navigation filter 152 or tentative markers module 156. Moreover, association checks module 154 sends information back to computer vision module 122 or machine learning module 132 if the association is not performed correctly. The strapdown INS 118 generates estimated kinematic state statistics for vehicle 102 relative to the landing zone frame, based on the inertial measurements from IMU 114, which is combined with output data from navigation filter 152 using a subtractor 180.

The navigation solution integrity module 170 is operative to assure that the navigation solution satisfies requirements and is useable by downstream systems of vehicle 102 in the landing zone. The navigation solution integrity module 170 provides a marker integrity check, which detects and excludes markers with three or four corners that lead to an inconsistent navigation solution, using solution separation techniques. Further details related to the operation of the integrity checks are described hereafter.

The present approach is described in additional detail in the following sections.

### Filter and Association

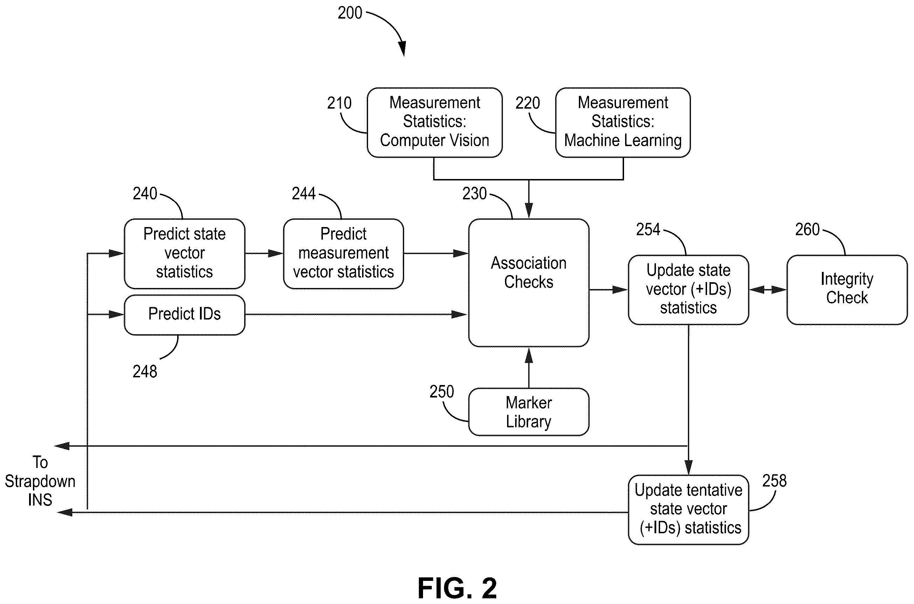

Figure 2 is a block diagram of a system 200 for providing filter and association functions that can be performed in the present navigation system, according to an example embodiment. As shown, measurement statistics are computed by a computer vision algorithm (block 210), and measurement statistics are also computed by a machine learning algorithm (block 220). The respective measurement statistics are then sent to an association checks module 230. A navigation filter (not shown) is used to predict state vector statistics (block 240), which in turn is used to predict measurement vector statistics (block 244), which are sent to association checks module 230. A predict IDs function (block 248) sends predicted IDs from the navigation filter to association checks module 230.

The association checks module 230 performs a first measurement statistics check for the measurement statistics from the computer vision algorithm based on the predicted measurement vector statistics; and performs a second measurement statistics check for the measurement statistics from the machine learning algorithm based on the predicted measurement vector statistics. The association checks module 230 also performs a first ID check for a marker associated with a marker ID in a marker library 250 based on the measurement statistics from the computer vision algorithm and a predicted ID; and performs a second ID check for the marker associated with the marker ID in marker library 250 based on the measurement statistics computed by the machine learning algorithm and the predicted ID.

The association checks module 230 operates with the update state vector (+ IDs) statistics module 254 and outputs an update of state vector statistics with marker IDs, which is sent to a strapdown INS for further processing. The association checks module 230 also operates with the update tentative state vector (+IDs) statistics module 258 and outputs an update of the tentative state vector statistics with marker IDs, which is also sent to the strapdown INS for further processing. An integrity check 260 for the update of state vector statistics with marker IDs (from 254) can be performed to detect and exclude markers with three or four corners that lead to an inconsistent navigation solution, using solution separation techniques.

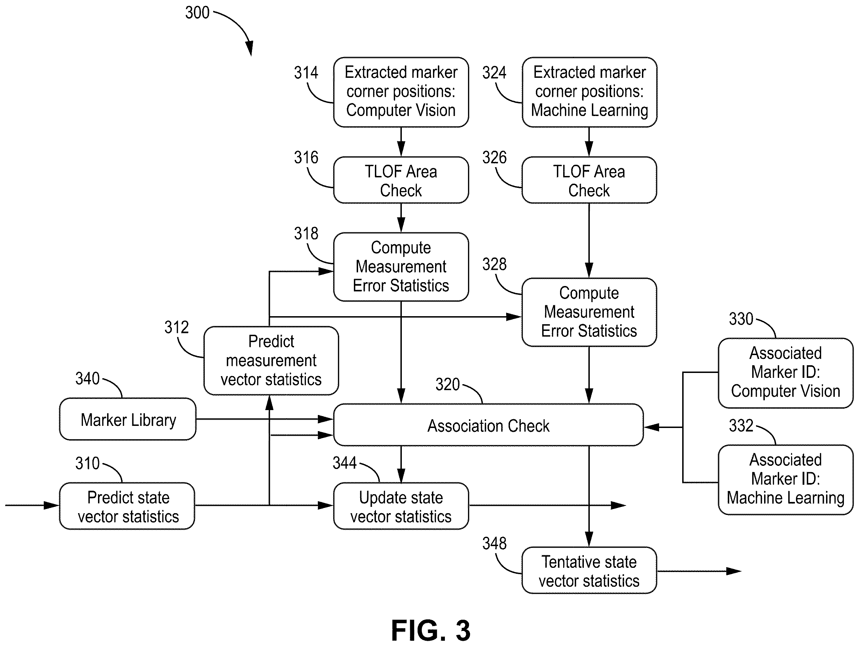

Figure 3 is a functional block diagram of a method 300 for providing filter and association functions, according to an example implementation. An input from a navigation filter, represented by *δX*_{*k*/}*ₖ, P*_{*k*/}*ₖ, ID*_{*k*/}*ₖ,* is used to predict state vector statistics and marker ID (block 310), represented by *δX*_{*k+*1/}*ₖ, P*_{*k*+1/}*ₖ, ID*_{*k+*1/}*ₖ,* which is used to predict measurement vector statistics (block 312). Extracted marker corner positions from a computer vision algorithm (block 314), represented by ${ρ}_{m , CV , g , i , k + 1}^{LZ}$*, R*_{*CV,g,i,k+*1}*,* are sent to a touchdown and lift-off (TLOF) area check (block 316) to confirm that three and four corner position statistics are within the TLOF area. If the three and four corner position statistics are within the TLOF area, represented by ${ρ}_{m , CV , g , i , k + 1}^{LZ} \leq {ρ}_{TLOF}^{LZ}$, then a compute measurement error statistics function (block 318) receives the predicted measurement vector statistics (from block 312), represented by ${ρ}_{j , i , k + 1 / k}^{LZ}$, *P*_{*ρ,j,i,k+*1/}*ₖ,* and receives the extracted marker corner positions from computer vision algorithm (block 314), represented by ${ρ}_{m , CV , g , i , k + 1}^{LZ}$, *R*_{*CV*,*g*,*i*,*k*+1}. The computed measurement error statistics, represented by ${δρ}_{m , CV , \overline{g} , i , k + 1}^{LZ} , {S}_{CV , \overline{g} , i , k + 1}^{LZ}$, from the input statistics are then sent to an association check function 320.

Likewise, extracted marker corner positions from a machine learning algorithm (block 324), represented by ${ρ}_{m , ML , l , i , k + 1}^{LZ}$, *R*_{*ML,l,i,k+*1}, are sent to a TLOF area check (block 326) to confirm that the three and four corner position statistics are within the TLOF area. If the three and four corner position statistics are within the TLOF area, represented by ${ρ}_{m , ML , l , i , k + 1}^{LZ} \leq {ρ}_{TLOF}^{LZ}$*,* then a compute measurement error statistics function (block 328) receives the predicted measurement vector statistics (from block 312) and receives the extracted marker corner positions from a machine learning algorithm (block 324). The computed measurement error statistics, represented by ${δρ}_{m , ML , \overline{l} , i , k + 1}^{LZ} , {S}_{ML , \overline{l} , i , k + 1}^{LZ}$, from the input statistics are then sent to the association check function 320.

The association check function 320 also receives a predicted marker ID, represented by *ID*_{*k+*1/}*ₖ,* an associated marker ID from the computer vision algorithm (block 330), represented by *ID*_{*CV,k*+1}*,* and an associated marker ID from the machine learning algorithm (block 332), represented by *ID*_{*ML,k*+1}*.* The association check function 320 performs a first ID check for the marker associated with the marker ID from the computer vision algorithm (block 330) using a marker library 340 and performs a second ID check for the marker associated with the marker ID from the machine learning algorithm (block 332) using marker library 340.

An update of state vector statistics (block 344) is then produced based on an output from association check function 320 and the predicted state vector statistics and marker ID (from block 310). The update of the state vector statistics, represented by *δX*_{*k+*1/*k+*1}*, P*_{*k+*1/*k+*1}*, ID*_{*k+*1/*k+*1}*,* is then sent to a strapdown INS for further processing. An update of tentative state vector statistics (block 348) for tentative markers can be produced based on the output from association check function 320 and the update of the state vector statistics (from block 344). The update of tentative state vector statistics (block 348) can then be sent to the strapdown INS for further processing.

### Association Checks

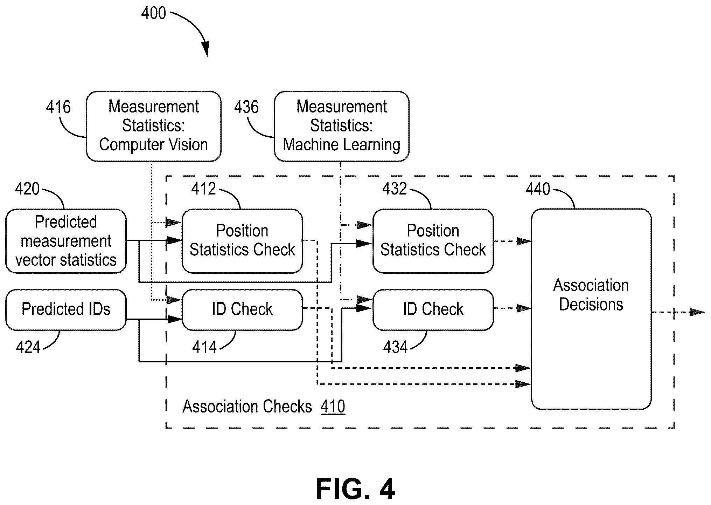

Figure 4 is a functional block diagram of a method 400 for providing association checks, according to an example implementation. An association checks function 410 includes a first position statistics check 412 and a first ID check 414, which are operative to receive measurement statistics including position statistics computed by a computer vision algorithm (block 416). In addition, first position statistics check 412 is configured to receive predicted measurement vector statistics (block 420), and first ID check 414 is configured to receive predicted IDs (block 424).

The association checks function 410 also includes a second position statistics check 432, and a second ID check 434, which are operative to receive measurement statistics including position statistics computed by a machine learning algorithm (block 436). In addition, second position statistics check 432 is configured to receive the predicted measurement vector statistics (from block 420), and second ID check 434 is configured to receive the predicted IDs (from block 424).

An association decisions module 440 is configured to receive the output from first position statistics check 412 and first ID check 414, and the output from second position statistics check 432 and second ID check 434. The association decisions module 440 is operative to determine if the results of the first position statistics check 412 and first ID check 414 pass or fail, and if the results of the second position statistics check 432 and second ID check 434 pass or fail.

### Association Checks: Compute Statistics

The association checks function computes statistics using the equations listed as follows. For computer vision (CV), a measurement constraint is defined by the terms: ${δρ}_{CV , g , i}^{LZ} , {S}_{CV , g , i} ∀ g = 1 , .. , G ;$ where:
G ≡ Number of extracted markers by CV.
The association checks function cycles through all the extracted markers, G, and compares their measured positions to all predicted marker locations, J, using the following equations: $\begin{matrix}{δρ}_{CV , \overline{g} , i , k + 1}^{LZ} = {ρ}_{CV , m , g , i , k + 1}^{LZ} - {ρ}_{j , i , k + 1 / k}^{LZ} \\ = {r}_{CV , m , b , g , i , k + 1}^{LZ} - {p}_{k + 1 / k}^{LZ} - {v}_{g , i , k + 1}^{LZ} - {ρ}_{j , i , k + 1 / k}^{LZ}\end{matrix}$ $\begin{matrix}{S}_{CV , \overline{g} , i , k + 1}^{LZ} = {\left({δρ}_{CV , g , i , k + 1}^{LZ}\right)}^{T} \left({R}_{CV , g , i , k + 1}+{P}_{p , k + 1 / k}+{R}_{ρ , j , i , k + 1 / k}\right) {δρ}_{CV , g , i , k + 1}^{LZ} \\ ≡ innovation distance\end{matrix}$

For machine learning (ML), a measurement constraint is defined by the terms: ${δρ}_{ML , l , i}^{LZ} , {S}_{ML , l , i} ∀ l = 1 , .. , L ;$ where:
*L* ≡ Number of extracted markers by ML
The association checks function cycles through all the extracted markers, L, and compares their measured positions to all predicted marker locations, J, using the following equations: $\begin{matrix}{δρ}_{ML , \overline{l} , i , k + 1}^{LZ} = {ρ}_{ML , m , l , i , k + 1}^{LZ} - {ρ}_{j , i , k + 1 / k}^{LZ} \\ = {r}_{ML , m , b , l , i , k + 1}^{LZ} - {p}_{k + 1 / k}^{LZ} - {v}_{g , i , k + 1}^{LZ} - {ρ}_{j , i , k + 1 / k}^{LZ}\end{matrix}$ ${S}_{ML , \overline{l} , i , k + 1}^{LZ} = {\left({δρ}_{ML , l , i , k + 1}^{LZ}\right)}^{T} \left(\begin{matrix}{R}_{ML , l , i , k + 1} + {P}_{p , k + 1 / k} + \\ {R}_{ρ , j , i , k + 1 / k}\end{matrix}\right) {δρ}_{ML , l , i , k + 1}^{LZ} ≡ innovation distance .$

### Association Check: Four Marker Corners and IDs

The association check used for four marker corners and IDs in the operational method of the present navigation system is described as follows. For computer vision, the method selects an association threshold, *ε*_{*CV,*4}*,* cycles through the innovation distances, and compares them to the association threshold as follows: ${S}_{CV , \overline{g} , i , k + 1}^{LZ} \leq or > {ε}_{CV , 4} .$ If ${S}_{CV , \overline{g} , i , k + 1}^{LZ} \leq {ε}_{CV , 4} ∀ i$*, i =* 1*, ... , I,* then there is position association. In this case, predicted marker positions statistically match the measured marker positions. If ${S}_{CV , \overline{g} , i , k + 1}^{LZ} > {ε}_{CV , 4}$ for any *i,* then the markers are not associated. In this case, there is a predicted marker corner position and measurement corner position mismatch.

For machine learning, the method selects an association threshold, *ε*_{*ML,*4}*,* cycles through the innovation distances, and compares them to the association threshold as follows: ${S}_{ML , \overline{l} , i , k + 1}^{LZ} \leq or > {ε}_{ML , 4}$ If ${S}_{ML , \overline{l} , i , k + 1}^{LZ} \leq {ε}_{ML , 4} ∀ i$, *i* = 1, ..., *I,* then there is position association. In this case, predicted marker positions statistically match the measured marker positions. If ${S}_{ML , \overline{l} , i , k + 1}^{LZ} > {ε}_{ML , 4}$ for any *i,* then the markers are not associated. In this case, there is a predicted marker corner position and measurement corner position mismatch.

A first association check approach uses a statistical distance test, or other known distance-check techniques, to compare the predicted corner positions from the navigation system to the extracted corner positions from the computer vision and machine learning approaches. This check cycles through all possible comparisons to identify the most likely comparison. All four (three) corner positions must pass the statistical distance test. This prevents extracted corner positions from mirrored buildings or the background from corrupting the navigation solution.

A second association check approach uses marker IDs as the association check. The ID comparison is between associations that pass the first association check, and the associations performed by the computer vision and machine learning algorithms, which provide a marker number. The marker number is associated with the tracked markers from the navigation filter.

### Association Check: Three Marker Corners

The association check used for three marker corners in the operational method of the present navigation system is described as follows.

For computer vision, the method selects an association threshold, *ε*_{*CV,*3}*,* cycles through the innovation distances, and compares them to the association threshold as follows: ${S}_{CV , \overline{g} , i , k + 1}^{LZ} \leq or > {ε}_{CV , 3} .$
If ${S}_{CV , \overline{g} , i , k + 1}^{LZ} \leq {ε}_{CV , 3} ∀ i$, *i =* 1, ... , *I*, then there is position association. In this case, predicted marker corner positions statistically match the measured marker corner positions. If ${S}_{CV , \overline{g} , i , k + 1}^{LZ} > {ε}_{CV , 3}$ for any *i,* then the markers are not associated. In this case, there is a predicted marker corner position and measurement marker corner position mismatch.

For machine learning, the method selects an association threshold, *ε*_{*ML,*3}*,* cycles through the innovation distances, and compares them to the association threshold as follows: ${S}_{ML , \overline{l} , i , k + 1}^{LZ} \leq or > {ε}_{ML , 3}$ If ${S}_{ML , \overline{l} , i , k + 1}^{LZ} \leq {ε}_{ML , 3} ∀ i$*, i =* 1*, ... , I,* then there is position association. In this case, predicted marker corner positions statistically match the measured marker corner positions. If ${S}_{ML , \overline{l} , i , k + 1}^{LZ} > {ε}_{ML , 3}$ for any *i*, then the markers are not associated. In this case, there is a predicted marker corner position and measured marker corner position mismatch.

Further details related to various aspects of the present navigation system for UAS operations at vertiports is described in a co-pending application entitled NAVIGATION SYSTEM FOR UNCREWED AIRCRAFT SYSTEMS AT VERTIPORTS, Attorney Docket No. H237895, the disclosure of which is incorporated by reference herein.

### Integrity

The integrity checks of the present approach are operative to assure the navigation solution satisfies certain requirements and is useable by downstream vehicle systems. In general, the integrity checks detect and exclude a three-corner or four-corner marker that leads to an inconsistent navigation solution. Sub-solutions are used to determine whether a marker leads to an inconsistent navigation solution. The sub-solutions identify an inconsistent marker, and one sub-solution does not include the inconsistent marker. The sub-solutions can use both three-corner markers and four-corner markers.

Sub-sub-solutions are used for the detected inconsistent marker, to determine whether one of the marker corners is causing the inconsistent solution. This is applied only for four-corner markers because sub-sub-solutions use three corners from the markers. As such, this approach cannot be applied for three-corner markers because sub-sub-solutions would only have two corners. The two corners define a line, and a line's orientation is ambiguous in space.

If one of the four corners is identified as leading to an inconsistent solution and the other three corners leads to a consistent solution with the branch's sub-solution, then the sub-sub-solution is promoted as the main solution. If two or more of the four corners are identified as leading to inconsistent solutions, then the sub-solution is promoted as the main solution.

### Integrity Checks for Confirmed Markers

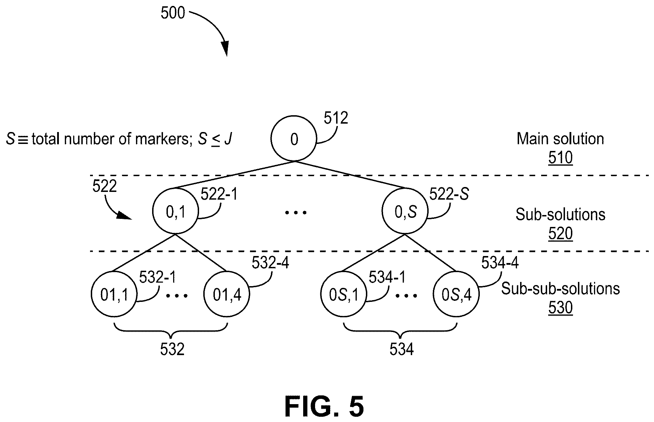

Figure 5 is a schematic diagram of an exemplary solution separation filter arrangement 500 that can be utilized by the integrity checks function. Each circle of filter arrangement 500 represents a filter, a sub-filter, or a sub-sub-filter. The filters can be Kalman filters, unscented Kalman filters, or other Bayesian filters known to those skilled in the art.

At a main solution level 510, a main filter 512 (circle 0) incorporates all markers S contributing to a navigation solution, and is represented by the expression: $S ≡ total number of markers ; S \leq J$

At a sub-solutions level 520 from main solution level 510, a sub-filter set 522 includes sub-filter 522-1 (circle 0, 1) ... sub-filter 522-S (circle 0, S). The sub-filter set 522 incorporates combinations of S-1 markers contributing to the navigation solution, where each sub-filter excludes a different marker. The sub-filter set 522 can include markers with three corners or four corners that have been detected. The sub-solutions level 520 is used to determine whether a marker leads to an inconsistent navigation solution by identifying an inconsistent marker, such that one sub-solution does not include an inconsistent marker.

A sub-sub-solutions level 530 is used to determine whether one of the corners of a four-corner inconsistent marker is causing the inconsistent navigation solution. At sub-sub-solutions level 530, four sub-sub-filters are used for each sub-filter in sub-filter set 522, where each sub-sub-filter excludes one of the four marker corners. For example, a sub-sub-filter set 532 of sub-filter 522-1 includes sub-sub-filter 532-1 (circle 01,1) ... sub-sub-filter 532-4 (circle 01,4). A sub-sub-filter set 534 of sub-filter 522-S includes sub-sub-filter 534-1 (circle 0*S*,1) ... sub-sub-filter 534-4 (circle 0*S*,4).

### Integrity Checks for Sub-Solutions

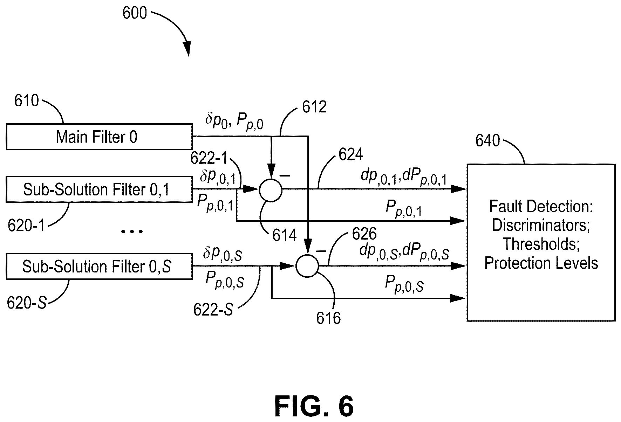

Figure 6 is a functional block diagram of an integrity checks module 600 for sub-solutions, according to an example implementation. A main filter 610 (0) computes a vehicle navigation solution 612, including the state error mean vector and the state covariance matrix (*δp*₀*, P*_{*p,*0}), which is sent to a subtractor 614. A set of sub-solution filters includes sub-solution filter 620-1 (0,1) ... sub-solution filter 620-*S* (0,S). Although not shown, additional sub-solution filters can be used in integrity checks module 600 as needed and operate in the same manner as described below for sub-solution filters 620-1 and 620-S.

The sub-solution filter 620-1 computes and outputs a sub-solution 622-1, including the state error mean vector and the state covariance matrix (*δp*_{0,1}, *P*_{*p,*0,1}) that is sent to subtractor 614. A differential 624 (*dp*_{0,1}*, dP*_{*p,*0,1}) between sub-solution 622-1 and navigation solution 612 is output by subtractor 614 to a fault detection module 640. The *P*_{*p*,0,1} component of sub-solution 622-1 is also received by fault detection module 640.

The sub-solution filter 620-S computes and outputs a sub-solution 622-S, including the state error mean vector and the state covariance matrix (*δp*₀*_{,S}, P*_{*p,*0*,S*}) that is sent to a subtractor 616, which also receives navigation solution 612. A differential 626 (*dp_{0,S}, dP*_{*p,*0*,S*}) between the sub-solution 622-S and navigation solution 612 is output by subtractor 616 to fault detection module 640. The *P*_{*p,*0*,S*} component of sub-solution 622-S is also received by fault detection module 640.

The fault detection module 640 employs discriminators, thresholds, and protection levels to determine whether a detected marker at a vehicle landing zone leads to an inconsistent navigation solution. Additional details regarding the discriminators, thresholds, and protection levels used in fault detection module 640 are described in the following sections.

### Fault Detection and Exclusion

The discriminators used in fault detection module 640 are represented by the following expression: ${d}_{0 , s} = {\left‖{δp}_{0}-{δp}_{0 , s}\right‖}_{2} = {\left‖d{p}_{0 , s}\right‖}_{2} ∀ s = 1 , … , S .$ The separation covariance matrix is represented by the following expression: ${dP}_{p , 0 , s} = E \left[{d}_{0 , s}{\left({d}_{0 , s}\right)}^{T}\right] = {P}_{p , 0} + {P}_{p , 0 , s} - 2 {P}_{p , 0 , 0 s}^{cross} ∀ s = 1 , … , S$ where: $\begin{matrix}{P}_{p , 0 , 0 s}^{cross} ≡ cross - correlation matrix between main filter 0 and sub - \\ filter 0 , s .\end{matrix}$ A decision threshold is represented by the equation: ${D}_{s} = {K}_{s , FA} \sqrt{{λ}^{dPp {,}_{0 , s}}}$ where: ${K}_{s , FA} = {Q}^{- 1} \left(\frac{{P}_{s , FA}}{2 S}\right) ; Q \left(x\right) = {\int }_{x}^{∞} {e}^{\frac{- {u}^{2}}{2}} du$ *λ*^{*dP*_{*p,*0*,s*}} = maximum eigenvalue of the separation covariance matrix
*K_{s,FA}* ≡ false alert coeffiencient for marker *s*
*P_{s,FA}* ≡ user -
selected probability of false alert per independent measurements for marker s.

If the discriminator is less than or equal to the decision threshold (*d*_{0,*s*} ≤ *Dₛ* ), then a marker is usable. If the discriminator is greater than the decision threshold (*d*₀*_{,s} > Dₛ*)*,* then a marker is unusable.

### Protection Levels

The protection level (PL) used in fault detection module 640 can be expressed as: ${PL}_{0 , s} = {d}_{0 , s} + {a}_{0 , s}$ where *a*_{0*,s*} incorporates the uncertainty of the sub-filter s and the probability of missed detection *P_{MD}.* The uncertainty effect of the sub-filter s can be expressed as: ${a}_{0 , s} = {K}_{MD} \sqrt{{λ}^{{P}_{0 , s}}}$ ${K}_{MD} = {Q}^{- 1} \left({P}_{MD}\right)$ where: ${λ}^{{P}_{0 , s}} ≡ maximum eigenvalue of sub - filter 0 , s$ *K_{MD}* ≡ missed detection coefficient.

The probability of missed detection, *P_{MD} ,* is derived from the probability of hazardous misleading information for the navigation system, *P_{HMI}.* The probability of missed detection is equally allocated among all sub-filters/sub-solutions.

### Integrity Checks for Sub-Sub-Solutions

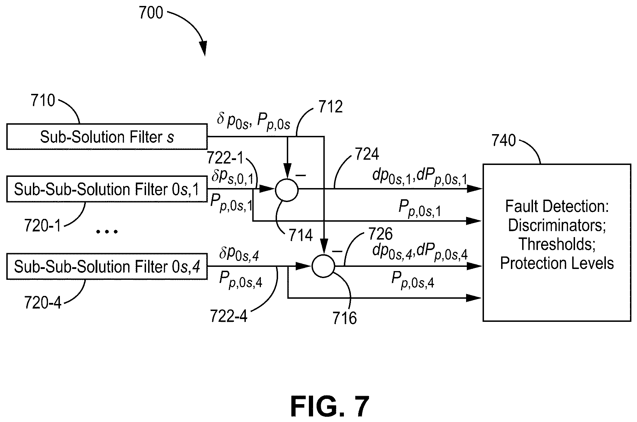

Figure 7 is a functional block diagram of an integrity checks module 700 for sub-sub-solutions, according to an example implementation. A sub-solution filter 710 (s) computes a sub-solution 712, including the state error mean vector and the state covariance matrix (*δp*₀*ₛ, P*_{*p*,0,*s*}), which is sent to a subtractor 714. A set of sub-sub-solution filters includes sub-sub-solution filter 720-1 (0*s,*1) ... sub-sub-solution filter 720-4 (0*s*,4). Although not shown, second (0s,2) and third (0s,3) sub-sub-solution filters are used in integrity checks module 700 and operate in the same manner as described below for sub-sub-solution filters 720-1 and 720-4.

The sub-sub-solution filter 720-1 computes and outputs a sub-sub-solution 722-1, including the state error mean vector and the state covariance matrix (*δp*_{0*s,*1}*, P*_{*p,*0*s,*1}) that is sent to subtractor 714. A differential 724 (*dp*_{0*s,*1}*, dP*_{*p,*0*s,*1}) between sub-sub-solution 722-1 and sub-solution 712 is output by subtractor 714 to a fault detection module 740. The *P*_{*p,*0*s,*1} component of sub-sub-solution 722-1 is also received by fault detection module 740.

The sub-sub-solution filter 720-4 computes and outputs a sub-sub-solution 722-4, including the state error mean vector and the state covariance matrix (*δp*_{0*s,*4}*, P*_{*p,*0*s,*4}) that is sent to a subtractor 716, which also receives sub-solution 712. A differential 726 (*dp*_{0*s,*4}*, dP*_{*p,*0*s,*4}) between the sub-sub-solution 722-4 and sub-solution 712 is output by subtractor 716 to fault detection module 740. The *P*_{*p,*0*s,*4} component of sub-sub-solution 722-4 is also received by fault detection module 740.

The fault detection module 740 employs discriminators, thresholds, and protection levels to determine whether one of the corners of a four-corner inconsistent marker is causing an inconsistent estimate of position statistics. Additional details regarding the discriminators, thresholds, and protection levels used in fault detection module 740 are described in the following sections.

### Fault Detection and Exclusion

The sub-sub solutions are checked if d_{0,*s*} > *Dₛ,* to determine if one of the four corners of sub-filter 0*s* is causing the inconsistent estimate of the position statistics. As noted, there are four sub-sub-filters for each sub-filter. Each sub-sub-filter uses three of the four corners excluded from a respective sub-filter to compute integrity statistics.

The discriminators used in fault detection module 740 are represented by the following expression: ${d}_{0 s , i} = {\left‖{δp}_{0 s}-{δp}_{0 s , i}\right‖}_{2} = {\left‖d{p}_{0 s , i}\right‖}_{2} ∀ s = 1 , … , S ; ∀ i = 1 , .. , 4$ The separation covariance matrix is represented by the following expression: ${dP}_{p , 0 s , i} = E \left[{d}_{0 s , i}{\left({d}_{0 s , i}\right)}^{T}\right] = {P}_{p , 0 s} + {P}_{p , 0 s , i} - 2 {P}_{p , 0 s , 0 si}^{cross} ∀ s = 1 , … , S ; ∀ i = 1 , .. , 4$ where: $\begin{matrix}{P}_{p , 0 s , 0 si}^{cross} ≡ cross - correlation matrix between sub - filter 0 s and sub - sub - \\ filter 0 s , i .\end{matrix}$ A decision threshold is represented by the equation: ${D}_{0 s} = {\overline{K}}_{s , FA} \sqrt{{λ}^{{dP}_{p , 0 s , i}}}$ where: ${\overline{K}}_{s , FA} = {Q}^{- 1} \left(\frac{{\overline{P}}_{s , FA}}{2 I}\right) ; Q \left(x\right) = {\int }_{x}^{∞} {e}^{\frac{- {u}^{2}}{2}} du$ *λ*^{*dP*_{*p,*0*s,i*}} ≡ maximum eigenvalue of the separation covariance matrix
*K̅_{s,FA}* ≡ false alert coeffiencient for marker s
*P̅_{s,FA}* = user - selected probability of false alert per independent measurements for marker s.

If the discriminator is less than or equal to the decision threshold (*d*_{0*s*,*i*} ≤ *dP*_{*p,*0*s,i*})*,* then a corner position of the marker is usable. If the discriminator is greater than the decision threshold (*d*₀*_{s,i} > dP*_{*p,*0*s,i*})*,* then a corner position of the marker is unusable.

If three of the four corner positions are found to be statistically consistent, then the sub-sub solution is promoted to the main solution. The marker corner position causing the statistical inconsistency is re-initialized. If two of the four corner positions are found to be statistically inconsistent, then the sub-solution is promoted to the main filter and the marker causing the statistical inconsistency is deleted from the state vector.

The processing units and/or other computational devices used in the method and system described herein may be implemented using software, firmware, hardware, or appropriate combinations thereof. The processing unit and/or other computational devices may be supplemented by, or incorporated in, specially designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system, or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: at least one vision sensor mounted on a vehicle; an inertial measurement unit (IMU) operative to produce inertial measurements for the vehicle; a strapdown inertial navigation system (INS) on the vehicle and configured to receive the inertial measurements from the IMU, at least one first processor on the vehicle and operatively coupled to the at least one vision sensor; at least one second processor on the vehicle and operatively coupled to the strapdown INS and the at least one first processor; and a navigation solution integrity module in operative communication with at least one second processor, the navigation solution integrity module including a fault detection function with a set of discriminators, decision thresholds, and protection levels; wherein the at least one first processor hosts a first set of program modules operative for extracting landing marker information, the first set of program modules comprising a computer vision module and a machine learning module that are configured to operate in parallel with each other; wherein the at least one second processor hosts a second set of program modules operative to provide filter and association functions, the second set of program modules comprising a navigation filter and an association checks module; wherein the navigation solution integrity module is operative to provide a marker integrity check, which detects and excludes landing markers with three or four corners that lead to an inconsistent navigation solution, using a solution separation technique.

Example 2 includes the system of Example 1, wherein the navigation solution integrity module includes a solution separation filter arrangement utilized by the marker integrity check, the solution separation filter arrangement comprising: a main solution level including a main filter that incorporates landing markers S contributing to a navigation solution; and a sub-solutions level including a set of sub-filters branched from the main filter, the sub-filters incorporating combinations of S-1 landing markers contributing to the navigation solution, wherein each of the sub-filters excludes a different one of the landing markers.

Example 3 includes the system of any of Examples 1-2, wherein the sub-solutions level is operative to determine whether a marker leads to an inconsistent navigation solution, by identifying an inconsistent marker and one sub-solution that does not include the inconsistent marker.

Example 4 includes the system of any of Examples 1-3, wherein the sub-solutions level is operative for three-corner landing markers and four-corner landing markers.

Example 5 includes the system of any of Examples 2-4, wherein the solution separation filter arrangement further comprises: a sub-sub-solutions level, where four sub-sub-filters are branched from each of the sub-filters, wherein the sub-sub-solutions level is operative for four-corner landing markers.

Example 6 includes the system of Example 5, wherein each sub-sub-filter excludes one of four marker corners for a respective four-corner marker.

Example 7 includes the system of Example 6, wherein if one of the four marker corners is identified as leading to an inconsistent navigation solution, and the other three marker corners lead to a consistent navigation solution with respect to a sub-solution in a branch sub-filter, then a sub-sub-solution is promoted as a main solution.

Example 8 includes the system of Example 6, wherein if two or more of the four marker corners are identified as leading to an inconsistent navigation solution, then a sub-solution in a branch sub-filter is promoted as a main solution.

Example 9 includes the system of any of Examples 1-8, wherein the strapdown INS is operative to generate estimated kinematic state statistics for the vehicle relative to a landing zone frame, based on the inertial measurements from the IMU, which is combined with output data from the navigation filter using a subtractor.

Example 10 includes the system of any of Examples 1-9, wherein the landing markers comprise one or more fiducials, structured patterns, or Aruco codes.

Example 11 includes the system of any of Examples 1-10, wherein the vehicle is an uncrewed aircraft systems (UAS) vehicle.

Example 12 includes a method comprising: providing a first processing unit in a vehicle having a vision sensor mounted thereon, the first processing unit hosting a first set of program modules comprising a computer vision algorithm and a machine learning algorithm, which operate in parallel with each other; providing a second processing unit in the vehicle, the second processing unit in communication with an onboard strapdown inertial navigation system (INS) and the first processing unit, the second processing unit hosting a second set of program modules comprising a navigation filter and an association checks module; and providing a navigation solution integrity module in communication with the second processing unit, the navigation solution integrity module including a fault detection function with a set of discriminators, decision thresholds, and protection levels, the navigation solution integrity module including a solution separation filter arrangement that performs a process comprising: at a main solution level including a main filter, incorporating landing markers S contributing to a navigation solution into the main filter; and at a sub-solutions level including a set of sub-filters branched from the main filter, incorporating combinations of S-1 landing markers contributing to the navigation solution into the sub-filters, and excluding a different one of the landing markers in each of the sub-filters; wherein the navigation solution integrity module provides a marker integrity check by detecting and excluding landing markers with three or four corners that lead to an inconsistent navigation solution, using the solution separation filter arrangement.

Example 13 includes the method of Example 12, wherein the solution separation filter arrangement further performs a process comprising: at a sub-sub-solutions level operative for four-corner landing markers, where four sub-sub-filters are branched from each of the sub-filters, excluding one of four marker corners in each of the sub-sub-filters for a respective four-corner marker.

Example 14 includes the method of Example 13, wherein if one of the four marker corners is identified as leading to an inconsistent navigation solution, and the other three marker corners lead to a consistent navigation solution with respect to a sub-solution in a branch sub-filter, then promoting a sub-sub-solution as a main solution.

Example 15 includes the method of Example 13, wherein if two or more of the four marker corners are identified as leading to an inconsistent navigation solution, then promoting a sub-solution in a branch sub-filter as a main solution.

Example 16 includes the method of any of Examples 12-15, wherein the solution separation filter arrangement further performs a process comprising: sending a navigation solution from the main filter to a first subtractor; sending a first sub-solution from a first sub-filter to the first subtractor; wherein a first differential is calculated and sent by the first subtractor to the fault detection function, which also receives a state covariance matrix from the first sub-filter; sending the navigation solution from the main filter to one or more additional subtractors; and sending one or more additional sub-solutions from one or more additional sub-filters to the one or more additional subtractors; wherein one or more additional differentials is calculated and sent by the one or more additional subtractors to the fault detection function, which also receives a respective state covariance matrix from the one or more additional sub-filters.

Example 17 includes the method of Example 13, wherein the solution separation filter arrangement further performs a process comprising: sending a first sub-solution from a first sub-filter to a first subtractor; sending a first sub-sub-solution from a first sub-sub-filter to the first subtractor; wherein a first differential is calculated and sent by the first subtractor to the fault detection function, which also receives a state covariance matrix from the first sub-sub-filter; sending the first sub-solution from the first sub-filter to a second subtractor; and sending a second sub-sub-solution from a second sub-sub-filter to the second subtractor; wherein a second differential is calculated and sent by the second subtractor to the fault detection function, which also receives a state covariance matrix from the second sub-sub-filter.

Example 18 includes the method of Example 17, wherein the solution separation filter arrangement further performs a process comprising: sending the first sub-solution from the first sub-filter to a third subtractor; sending a third sub-sub-solution from a third sub-sub-filter to the third subtractor; wherein a third differential is calculated and sent by the third subtractor to the fault detection function, which also receives a state covariance matrix from the third sub-sub-filter; sending the first sub-solution from the first sub-filter to a fourth subtractor; and sending a fourth sub-sub-solution from a fourth sub-sub-filter to the fourth subtractor; wherein a fourth differential is calculated and sent by the fourth subtractor to the fault detection function, which also receives a state covariance matrix from the fourth sub-sub-filter.

Example 19 includes the method of Examples 12-18, wherein the landing markers comprise one or more fiducials, structured patterns, or Aruco codes.

Example 20 includes the method of any of Examples 12-19, wherein the vehicle is an uncrewed aircraft systems (UAS) vehicle.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
at least one vision sensor mounted on a vehicle;
an inertial measurement unit (IMU) operative to produce inertial measurements for the vehicle;
a strapdown inertial navigation system (INS) on the vehicle and configured to receive the inertial measurements from the IMU,
at least one first processor on the vehicle and operatively coupled to the at least one vision sensor;
at least one second processor on the vehicle and operatively coupled to the strapdown INS and the at least one first processor; and
a navigation solution integrity module in operative communication with at least one second processor, the navigation solution integrity module including a fault detection function with a set of discriminators, decision thresholds, and protection levels;
wherein the at least one first processor hosts a first set of program modules operative for extracting landing marker information, the first set of program modules comprising a computer vision module and a machine learning module that are configured to operate in parallel with each other;
wherein the at least one second processor hosts a second set of program modules operative to provide filter and association functions, the second set of program modules comprising a navigation filter and an association checks module;
wherein the navigation solution integrity module is operative to provide a marker integrity check, which detects and excludes landing markers with three or four corners that lead to an inconsistent navigation solution, using a solution separation technique.

2. The system of claim 1, wherein the navigation solution integrity module includes a solution separation filter arrangement utilized by the marker integrity check, the solution separation filter arrangement comprising:
a main solution level including a main filter that incorporates landing markers S contributing to a navigation solution; and
a sub-solutions level including a set of sub-filters branched from the main filter, the sub-filters incorporating combinations of S-1 landing markers contributing to the navigation solution, wherein each of the sub-filters excludes a different one of the landing markers.

3. The system of claim 2, wherein the sub-solutions level is operative to determine whether a marker leads to an inconsistent navigation solution, by identifying an inconsistent marker and one sub-solution that does not include the inconsistent marker.

4. The system of claim 3, wherein the sub-solutions level is operative for three-corner landing markers and four-corner landing markers.

5. The system of claim 2, wherein the solution separation filter arrangement further comprises:
a sub-sub-solutions level, where four sub-sub-filters are branched from each of the sub-filters, wherein the sub-sub-solutions level is operative for four-corner landing markers.

6. The system of claim 5, wherein each sub-sub-filter excludes one of four marker corners for a respective four-corner marker.

7. The system of claim 6, wherein if one of the four marker corners is identified as leading to an inconsistent navigation solution, and the other three marker corners lead to a consistent navigation solution with respect to a sub-solution in a branch sub-filter, then a sub-sub-solution is promoted as a main solution.

8. The system of claim 6, wherein if two or more of the four marker corners are identified as leading to an inconsistent navigation solution, then a sub-solution in a branch sub-filter is promoted as a main solution.

9. A method comprising:
providing a first processing unit in a vehicle having a vision sensor mounted thereon, the first processing unit hosting a first set of program modules comprising a computer vision algorithm and a machine learning algorithm, which operate in parallel with each other;
providing a second processing unit in the vehicle, the second processing unit in communication with an onboard strapdown inertial navigation system (INS) and the first processing unit, the second processing unit hosting a second set of program modules comprising a navigation filter and an association checks module; and
providing a navigation solution integrity module in communication with the second processing unit, the navigation solution integrity module including a fault detection function with a set of discriminators, decision thresholds, and protection levels, the navigation solution integrity module including a solution separation filter arrangement that performs a process comprising:
at a main solution level including a main filter, incorporating landing markers S contributing to a navigation solution into the main filter; and
at a sub-solutions level including a set of sub-filters branched from the main filter, incorporating combinations of S-1 landing markers contributing to the navigation solution into the sub-filters, and excluding a different one of the landing markers in each of the sub-filters;
wherein the navigation solution integrity module provides a marker integrity check by detecting and excluding landing markers with three or four corners that lead to an inconsistent navigation solution, using the solution separation filter arrangement.

10. The method of claim 9, wherein the solution separation filter arrangement further performs a process comprising:
at a sub-sub-solutions level operative for four-corner landing markers, where four sub-sub-filters are branched from each of the sub-filters, excluding one of four marker corners in each of the sub-sub-filters for a respective four-corner marker;
wherein if one of the four marker corners is identified as leading to an inconsistent navigation solution, and the other three marker corners lead to a consistent navigation solution with respect to a sub-solution in a branch sub-filter, then promoting a sub-sub-solution as a main solution.
